# EUROPÄISCHE PATENTSCHRIFT

(11) **EP 2 352 411 B1**
(45) Veröffentlichungstag und Bekanntmachung des Hinweises auf die Patenterteilung: **11.03.2020**
(21) Anmeldenummer: 09736237.0
(22) Anmeldetag: 16.10.2009
(51) Int. Cl.: A47L 15/42, A47L 15/48

(54) **VERFAHREN ZUM BETREIBEN EINER GESCHIRRSPÜLMASCHINE**
METHOD FOR OPERATING A DISHWASHER
PROCÉDÉ POUR FAIRE FONCTIONNER UN LAVE-VAISSELLE

(30) Priorität: 07.11.2008 DE 102008043548
(43) Veröffentlichungstag der Anmeldung: 10.08.2011
(73) Patentinhaber: BSH Hausgeräte GmbH, 81739 München (DE)
(72) Erfinder: FAUTH, Michael, 91785 Pleinfeld (DE); JERG, Helmut, 89537 Giengen (DE); PAINTNER, Kai, 86477 Adelsried (DE); REITER, Andreas, 89435 Finningen (DE); RIEGER, Roland, 73492 Rainau (DE)
(86) Internationale Anmeldenummer: PCT/EP2009/063602
(87) Internationale Veröffentlichungsnummer: WO 2010/052117

(56) Entgegenhaltungen:
- EP-A2- 1 690 489
- WO-A1-2005/053502
- WO-A1-2005/053504
- WO-A1-2010/012716
- WO-A2-01/85003
- DE-A1- 10 353 774
- DE-A1- 10 353 775
- DE-A1-102005 004 089
- JP-A- 2006 020 753

## Beschreibung

Die Erfindung betrifft ein Verfahren zum Betreiben einer Geschirrspülmaschine, insbesondere einer Haushalts-Geschirrspülmaschine.

Aus der DE 103 53 774 A1, der DE 103 53 775 A1 und der DE 10 2005 004 096 A1 sind Geschirrspülmaschinen mit sogenannten Sorptionstrocknungssystemen zur exothermen Trocknung von gereinigtem Spülgut bekannt. Dabei wird in einem Teilprogrammschritt "Trocknen" des jeweiligen Geschirrspülprogramms der Geschirrspülmaschine zum Trocknen von Spülgut mittels eines Lüfters feuchte Luft aus dem als Spülbehälter dienenden Innenraum der Geschirrspülmaschine durch einen Sorptionsbehälter geleitet und durch das im Sorptionsbehälter befindliche reversibel dehydrierbare Trocknungsmaterial Feuchtigkeit aus der hindurchgeführten Luft entzogen. Zur Regenerierung, d.h. Desorption des Trocknungsmaterials, wird das reversibel dehydrierbare Trocknungsmaterial auf sehr hohe Temperaturen erhitzt. In diesem Trocknungsmaterial gespeichertes Wasser tritt dadurch als heißer Wasserdampf aus und wird durch eine mittels des Lüfters erzeugte Luftströmung in den Spülbehälter geleitet. Hierdurch kann Flüssigkeit und/oderein in dem Spülbehälter befindliches Geschirr sowie die im Spülbehälter befindliche Luft erwärmt werden.

Ein derartiges Sorptionstrocknungssystem hat sich für eine energiesparende und leise Trocknung des Geschirrs als sehr vorteilhaft erwiesen.

In der DE 103 53 774 A1 wird weiterhin angegeben, dass die Desorption während des Vorspülens und/oder des Reinigens durchgeführt werden kann. Ferner kann die dort offenbarte Geschirrspülmaschine auch zusätzlich einen Durchlauferhitzer umfassen.

Ferner beschreibt die DE 10 2005 004 089 A1 ein Verfahren zum Betreiben einer Geschirrspülmaschine, bei dem von einer Heizung einer Sorptionstrockenvorrichtung erwärmte Luft zur Erwärmung der Spülflotte und/oder des Spülgutes in den Spülbehälter geleitet wird. Nach einem bevorzugten Merkmal wird Luft aus dem Spülbehälter und/oder aus der Umgebungsluft während eines Teilprogrammschritts mit zu erwärmender Spülflotte, bevorzugt während des Teilprogrammschritts "Reinigen" und/ oder "Vorspülen" und/oder "Klarspülen" durch die Sorptionskolonne und in den Spülbehälter geleitet. Dabei wird vorgeschlagen, die Heizung nach dem Erreichen eines desorbierten Zustands des reversibel dehydrierbaren Materials der Sorptionstrockenvorrichtung weiter zu betreiben, bis die Nenntemperatur der Spülflotte erreicht ist. Ferner kann, um den Teilprogrammschritt "Reinigen" schneller durchführen zu können, eine zusätzliche Heizung vorgesehen sein, welche während eines Abschnitts zur Erhöhung der Temperatur auf die Nenntemperatur betrieben wird, wobei die zusätzliche Heizung als Wasserheizung ausgebildet sein kann.

Der Erfindung liegt die Aufgabe zugrunde, ein weiter verbessertes Sorptions- und/oder Desorptionsergebnis für das reversibel dehydrierbare Trocknungsmaterial der Sorptionstrocknungsvorrichtung zu erreichen.

Die Erfindung geht aus von einem Verfahren zum Betreiben einer Geschirrspülmaschine, insbesondere einer Haushalts-Geschirrspülmaschine, bei dem wenigstens zeitweise Spülgut während wenigstens zwei einer Mehrzahl von Programmschritten mit erwärmter Flüssigkeit beaufschlagt wird, wobei diese wenigstens zwei Programmschritte einen Programmschritt Vorspülen und einen Programmschritt Reinigen umfassen, und bei dem wenigstens teilweise ein Desorptionsvorgang eines reversibel dehydrierbaren Trockenmaterials, insbesondere Zeolith, eines Sorptionstrocknungssystems in einem Sorptionsbehälter bewirkt wird.

Erfindungsgemäß ist vorgesehen, dass der Desorptionsvorgang zweigeteilt und auf die Programmschritte Vorspülen und Reinigen verteilt wird, wobei die Flüssigkeit während des Programmschritts Vorspülen mit Hilfe einer Luftheizung des Sorptionstrocknungssystems ausgehend von einer Starttemperatur T0 während einer Phase P1' auf eine Temperatur T1' erwärmt wird, indem mittels eines Lüfters eine durch den Innenraum der Geschirrspülmaschine und den Sorptionsbehälter zirkulierende Luftströmung erzeugt wird, wobei die Luftheizung nach Erreichen der Temperatur T1 ' während der restlichen Vorspülphase deaktiviert wird, wobei zu dem Zeitpunkt der Deaktivierung der Luftheizung das Trocknungsmaterial noch nicht vollständig desorbiert ist, und wobei die Flüssigkeit im nachfolgenden Programmschritt Reinigen mittels der Luftheizung auf eine Temperatur T1 und anschließend durch Betrieb einer Wasserheizung auf die Temperatur T2 aufgeheizt wird, und dass während eines Klarspülschritts eine Erwärmung der Flüssigkeit erfolgt. Vor oder während des ersten der wenigstens zwei Programmschritte, während denen Spülgut mit erwärmter Flüssigkeit beaufschlagt wird, ist eine besonders effiziente Desorption möglich, da die Luft im Innenraum der Geschirrspülmaschine Raumtemperatur hat und daher ein hohes Feuchtigkeitsaufnahmevermögen aufweist, während bei den nachfolgenden Programmschritten aufgrund einer heizungsbedingten Erwärmung der Luft das Feuchtigkeitsaufnahmevermögen der Luft reduziert ist.

In einer Weiterbildung ist vorgesehen, dass der Desorptionsvorgang wenigstens teilweise während eines Programmschritts Reinigen mit Reinigerzugabe und Reinigungswirkung durchgeführt wird. Dies erlaubt eine besonders energieeffiziente Reinigung von Spülgut.

In einer Weiterbildung ist vorgesehen, dass der Desorptionsvorgang wenigstens teilweise während eines Programmschritts Vorspülen mit Reinigungswirkung ohne Reinigerzugabe durchgeführt wird. Durch die damit verbundene Erwärmung kann die Reinigungswirkung während des Programmschritts Vorspülen und damit des Spülprogramms gesteigert werden.

In einer Weiterbildung ist vorgesehen, dass in einem in wärmeleitenden Kontakt mit der Umgebung der Geschirrspülmaschine stehenden Wassertank eine Flüssigkeitsmenge, insbesondere einer Frischwassermenge aus einem hausseitigen Wasserversorgungssystem, zwischengespeichert wird. Dabei wird der Wassertank am Ende eines Spülprogrammdurchlaufs befüllt, so dass in der Zwischenzeit bis zum nächsten Start eines Spülprogrammdurchlaufs sich die in dem Wassertank zwischengespeicherte Wassermenge ausgehend von einer Wasserzulauftemperatur von z. B. 15°C auf Raumtemperatur erwärmen kann. Diese auf Raumtemperatur erwärmte Flüssigkeitsmenge wird bei einem Spülprogrammdurchlauf zur Durchführung des Spülprogrammschritts Vorspülen verwendet. Eine erneute Befüllung mit Wasser aus dem Wasserversorgungssystem bewirkt eine entsprechende Abkühlung unter die Raumtemperatur.

Ferner wird die Aufgabe der Erfindung durch eine Geschirrspülmaschine, insbesondere eine Haushalts-Geschirrspülmaschine, gelöst, die ausgebildet ist zur wenigstens zeitweise Beaufschlagung von Spülgut mit erwärmter Flüssigkeit während wenigstens zwei einer Mehrzahl von Programmschritten, und die ein Sorptionstrocknungssystem aufweist, das ausgebildet ist, wenigstens teilweise einen Desorptionsvorgang eines reversibel dehydrierbaren Trockenmaterials, insbesondere Zeolith, zu bewirken, wobei erfindungsgemäß vorgesehen ist, dass die Geschirrspülmaschine ausgebildet ist, ^{ein} Verfahren gemäß einem der Verfahrensansprüche durchzuführen.

Weiterbildungen der erfindungsgemäßen Geschirrspülmaschine sind in den Unteransprüchen angegeben.

Die Erfindung und ihre Weiterbildung werden nachfolgend anhand von Zeichnungen näher erläutert.

Es zeigen:
- **Fig. 1**: eine schematische Darstellung eines Ausführungsbeispiels einer erfindungsgemäßen Geschirrspülmaschine mit einem Sorptionstrocknungssystem,
- **Fig.2**: eine schematische Darstellung des Temperaturverlaufs während eines nicht beanspruchten Spülprogrammdurchlaufs,
- **Fig.3**: eine schematische Darstellung des Temperaturverlaufs eines ersten Ausführungsbeispiels eines erfindungsgemäßen Spülprogrammdurchlaufs, und
- **Fig.4**: eine schematische Darstellung des Temperaturverlaufs eines weiteren, zweiten Ausführungsbeispiels eines erfindungsgemäßen Spülprogrammdurchlaufs.

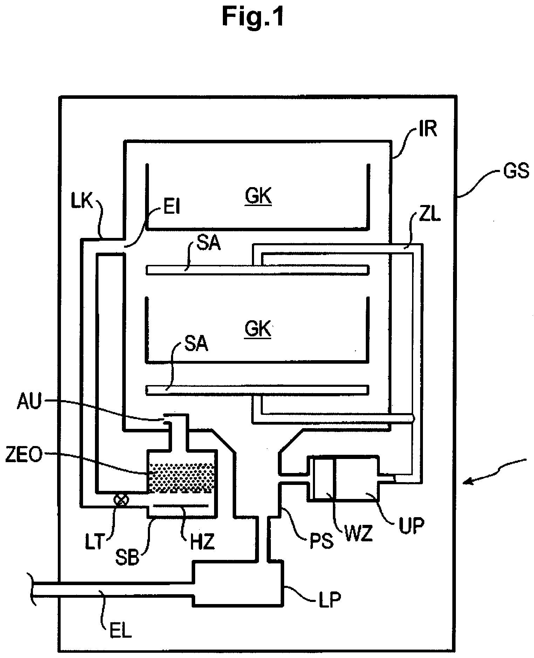

Es wird zunächst auf Figur 1 Bezug genommen.

Eine im vorliegenden Ausführungsbeispiel als Haushalts-Geschirrspülmaschine ausgebildete Geschirrspülmaschine GS weist einen als Spülbehälter dienenden Innenraum IR auf, der mittels einer an der Geschirrspülmaschine GS schwenkbar angelenkten Tür (nicht dargestellt) zum Beladen und Entladen geöffnet bzw. geschlossen werden kann. In dem Innenraum IR der Geschirrspülmaschine GS sind Geschirrkörbe GK zur Aufnahme von zu reinigendem Spülgut vorgesehen, die aus dem Innenraum IR der Geschirrspülmaschine GS herausgezogen werden können, um das Be- und Entladen zu erleichtern.

Um das in den Geschirrkörben GK gelagerte Spülgut zu reinigen, sind in dem Innenraum IR der Geschirrspülmaschine GS als Sprüharme SA ausgebildete Mittel zur Beaufschlagung von Spülgut mit Flüssigkeit vorgesehen, wobei es sich bei der Flüssigkeit um z.B. mit Reinigungsmitteln oder mit Klarspüler versetztes Wasser handeln kann, um so eine Reinigungswirkung bzw. streifenfreie Trocknung zu bewirken. Die vom Spülgut herabfließende Flüssigkeit sammelt sich in einem Pumpensumpf PS, der im Bodenbereich des Innenraumes IR der Geschirrspülmaschine GS angeordnet ist.

Die Sprüharme SA sind über eine Zuführleitung ZL mit einer Umwälzpumpe UP flüssigkeitsleitend verbunden, die neben anderen Bauteilkomponenten der Geschirrspülmaschine GS in einer Bodenbaugruppe BO unterhalb des Innenraums IR der Geschirrspülmaschine GS angeordnet ist. Im Betrieb, d.h. bei laufender Umwälzpumpe UP, saugt die Umwälzpumpe UP die sich in dem Pumpensumpf PS angesammelte Flüssigkeit an und fördert diese durch die Zuführleitung ZL zu den Sprüharmen SA. Um die durch den Betrieb der Umwälzpumpe UP umgewälzte Flüssigkeit zu erwärmen, weist die Umwälzpumpe eine integrierte Wasserheizung WZ zur Erwärmung der Flüssigkeit auf. Alternativ kann neben der Umwälzpumpe UP ein separater Durchlauferhitzer oder eine andere Wasserheizung vorgesehen sein. Zum Entleeren des Innenraums IR der Geschirrspülmaschine GS ist eine Laugenpumpe LP vorgesehen, die ebenfalls in flüssigkeitsleitender Verbindung mit dem Pumpensumpf PS steht und mit einer Entsorgungsleitung EL an ein hausseitiges Abwasserentsorgungsnetz angeschlossen werden kann.

Ferner weist die Geschirrspülmaschine GS ein Sorptionstrocknungssystem auf, mit dem in den Geschirrkörben GR angeordnetes und gereinigtes Spülgut am Ende eines Spülprogrammdurchlaufs getrocknet werden kann. Hierzu ist in der Bodenbaugruppe BO ein Sorptionsbehälter SB vorgesehen, der über einen Luftkanal LK mit einem Einlass EI luftleitend verbunden ist, wobei zur Erzeugung einer Zwangsdurchströmung ein Lüfter LT vorgesehen ist. Um die durch den Einlass El angesaugte und durch den Lüfter LT in den Sorptionsbehälter beförderte Luft wieder in den Innenraum IR der Geschirrspülmaschine GS zurückzufördern ist eine Ausblasöffnung AU im Bodenbereich des Innenraums IR der Geschirrspülmaschine GS vorgesehen.

Um eine Trocknung von gereinigtem Spülgut zu bewirken, wird durch den Lüfter LT Luft aus dem Innenraum IR der Geschirrspülmaschine GS angesaugt, durch den Sorptionsbehälter SB geleitet und wieder durch die Ausblasöffnung AU zurück in den Innenraum IR der Geschirrspülmaschine GS geleitet. Um hierbei die umgewälzte Luft zu trocknen ist in dem Sorptionsbehälter SB ein Trocknungsmittel zur Durchführung einer exothermen Trocknung vorgesehen. Es handelt sich dabei um ein reversibel dehydrierbares Trocknungsmaterial, z.B. Zeolith, das auf Grund seiner hygroskopischen Eigenschaft Wasser aufnimmt, wobei zeitgleich Wärmeenergie freigesetzt wird. Durch diese freigesetzte Wärmeenergie wird eine Erwärmung der umgewälzten Luft bewirkt, was zugleich das Feuchtigkeitsaufnahmevermögen der umgewälzten Luft erhöht. Am Ende eines Trocknungsvorgangs ist eine Flüssigkeitsmenge in dem Trocknungsmaterial ZEO gespeichert.

Um das Aufnahmevermögen des Trocknungsmittels ZEO für einen erneuten Spülprogrammdurchlauf wieder herzustellen, ist eine Luftheizung HZ vorgesehen, die im vorliegenden Ausführungsbeispiel in dem Sorptionsbehälter SB angeordnet ist. Es ist jedoch auch möglich, eine Luftheizung außerhalb des Sorptionsbehälters SB anzuordnen, z.B. in dem Luftkanal LK, um eine Erwärmung der in den Sorptionsbehälter SB geförderten Luft zu bewirken. Um die in den Trocknungsmaterial ZEO gespeicherte Flüssigkeitsmenge auszutreiben, wird eine mit dem Lüfter LT erzeugte Luftströmung erwärmt, so dass das Trocknungsmaterial ZEO auf Temperaturen erhitzt werden kann, bei denen die in dem Trocknungsmaterial ZEO gespeicherte Wassermenge wieder freigesetzt werden kann.

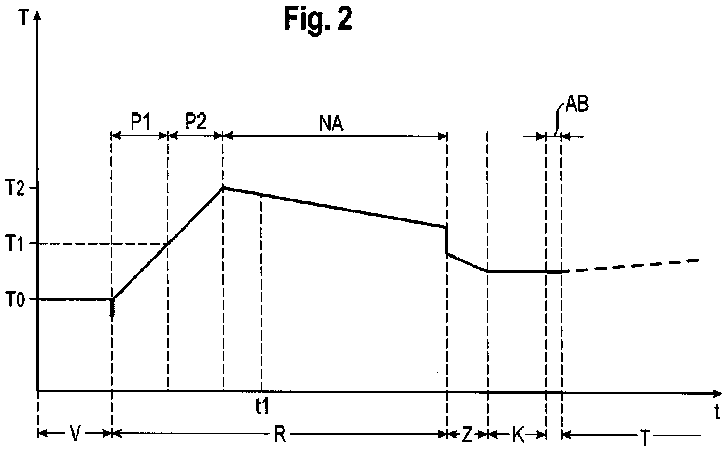

Es wird nun zusätzlich auf die Figuren 2 bis 4 Bezug genommen.

Geschirrspülmaschinen GS durchlaufend zur Reinigung und Trocknung von zu reinigendem Spülgut Spülprogramme, die aus einer Mehrzahl von Programmschritten bestehen, die nacheinander durchlaufen werden. Ein derartiges Programm kann aus den Programmschritten Vorspülen V, Reinigen R, Zwischenspülen Z, Klarspülen K und Trocknen T bestehen, wobei einzelne Programmschritte, wie z. B. das Vorspülen V oder Zwischenspülen Z auch ausgeblendet werden können, während es auch denkbar ist, einzelne Programmschritte mehrfach zu durchlaufen, wie z.B. das Zwischenspülen Z. Während des Vorspülens V wird bspw. Spülgut mit Wasser ohne Zugabe von Reinigungsmitteln beaufschlagt, wobei dies entweder mit nicht erwärmtem Wasser oder mit mittels einer Heizung erwärmtem Wasser durchgeführt wird. Hierzu kann Wasser verwendet werden, dass in einem Wassertank (nicht dargestellt) gespeichert wurde. Ein derartiger Wassertank kann mit der Umgebung der Geschirrspülmaschine in wärmeleitender Verbindung stehen, so dass in dem Wassertank zwischengespeicherte Flüssigkeit, wie z.B. Wasser aus einem hausseitigen Versorgungssystem, sich auf Raumtemperatur erwärmen kann. In dem Reinigungsschritt R erfolgt eine Reinigung von Spülgut durch Beaufschlagung von mit Reinigungsmitteln versetztem Wasser, d.h. während des Reinigungsschritts erfolgt eine Reinigungsmittelzugabe. Ferner erfolgt eine Erwärmung der Flüssigkeit, um so die Reinigungswirkung des Reinigungsmittels zu steigern. Dabei setzt sich der Reinigungsschritt R aus einer Heizphase P1, P2, in der die Flüssigkeit in der Geschirrspülmaschine GS mittels Heizmitteln erwärmt wird, bis eine vorgegebene Maximal temperatur erreicht ist, und einer anschließenden Nachwaschphase zusammen, während der bei ausgeschaltetem Heizungsmittel die sich langsam abkühlende Flüssigkeit mittels der Umwälzpumpe UP umgewälzt wird. In dem Programmschritt Zwischenspülen Z wird das Spülgut mit Flüssigkeit beaufschlagt, um so Schmutzreste aus der Geschirrspülmaschine GS zu fördern. Der nächste Programmschritt ist das Klarspülen K zur Vorbereitung des Programmschritts Trocknen T, bei dem mit Klarspülmittel versetztes Wasser mittels der Umwälzpumpe umgewälzt und über die Sprüharme SA auf das nun gereinigte Spülgut aufgebracht wird. Abschließend erfolgt der Programmschritt Trocknen T, in dem das Spülgut nicht mehr mit Flüssigkeit beaufschlagt wird, sondern durch Betrieb des Lüfters LT eine durch den Innenraum IR der Geschirrspülmaschine GS und dem Sorptionsbehälter SB zirkulierende Luftströmung erzeugt wird. Zwischen den einzelnen Programmschritten kann ein vollständiger oder wenigstens teilweiser Flüssigkeitswechsel durchgeführt werden, d.h. die Geschirrspülmaschine GS wird mittels der Laugenpumpe LP und der Entsorgungsleitung EL entleert und durch eine zu einem hausseitigen Versorgungssystem eine Verbindung herstellende Versorgungsleitung (nicht dargestellt) wieder neu befallt.

Bei dem Spülprogrammablauf gemäß Figur 2 erfolgt nur in dem Programmschritt Reinigen R eine Erwärmung von Flüssigkeit. Dabei wird ausgehend von einer Starttemperatur T0 zuerst während einer ersten Phase P1 die mit der Umwälzpumpe UP umgewälzte Flüssigkeit durch die Luftheizung HZ in dem Sorptionsbehälter SB auf eine maximale Temperatur T1 erwärmt, wobei zugleich der Lüfter LT eine durch den Innenraum IR der Geschirrspülmaschine GS zirkulierende Luftströmung erzeugt. Durch die Luftheizung HZ wird das Trocknungsmaterial ZEO in den Sorptionsbehälter SB auf Temperaturen erhitzt, bei denen die in dem Trocknungsmaterial ZEO gespeicherte Wassermenge aus dem Trocknungsmaterial ZEO ausgetrieben und durch die Ausblasöffnung AU in den Innenraum IR der Geschirrspülmaschine GS gefördert wird. Durch die Wirkung der Luftheizung HZ ist diese Flüssigkeitsmenge aufgeheizt und bewirkt somit durch die Vermischung mit der bereits mit der Umwälzpumpe UP umgewälzten Flüssigkeit eine Erwärmung der Gesamtflüssigkeitsmenge im Innenraum IR der Geschirrspülmaschine GS. Dadurch, dass mittels der Luftheizung HZ während des Programmschritts Reinigen R eine Aufheizung bis auf die erste Temperatur T1 erfolgt, ist sichergestellt, dass das Trockenmaterial ZEO durch die Umwälzung von verhältnismäßig kalter und trockener Luft aus dem Innenraum IR der Geschirrspülmaschine GS zuverlässig und vollständig desorbiert werden kann. Anstelle eines starren Spülprogrammablaufs, bei dem bei einem ersten Programmabschnitt, bei dem eine Erwärmung von Flüssigkeit erfolgt, ein Desorptionsvorgang durchgeführt wird, kann es auch in einem alternativen Ausführungsbeispiel vorgesehen sein, den Desorptionsvorgang beeinflussende Parameter zur Bestimmung des Zeitpunktes zur Durchführung der Desorption auszuwerten. Hierbei kann es sich die Lufttemperatur und die Wasserzulauftemperatur handeln. Beispielsweise kann ein Desorptionsvorgang in einem Programmschritt Reinigen oder Klarspülen oder auch, wenn dies zweckmäßig ist, während des Programmschritts Vorspülen erfolgen.

Während des Desorbierens mittels der Luftheizung HZ wird die Ausblasöffnung AU in dem Innenraum IR der Geschirrspülmaschine GS gekühlt, um so sicherzustellen, dass es auf Grund der Heizleistung der Luftheizung HZ zu keiner übermäßigen Erwärmung der Ausblasöffnung HZ mit Überhitzungsschäden kommt.

Hierzu wird während des Betriebs der Luftheizung HZ, d.h. z.B. während der Phase P1, die Umwälzpumpe UP betrieben, so dass durch die Umwälzpumpe Flüssigkeit von dem Pumpensumpf PS durch die Zuführleitung zu dem Sprüharm SA gefördert wird. Hierdurch werden die Sprüharme SA in Rotation versetzt und bewirken durch Besprühen der Ausblasöffnung AU, insbesondere einer die Ausblasöffnung AU abdeckenden Kappe mit Flüssigkeit, eine Kühlung derselben.

In einer nächsten Phase P2 des Programmschritts Reinigen R wird mittels der Wasserheizung WZ die Flüssigkeitsmenge ausgehend von der ersten Temperatur T1 auf die zweite Temperatur T2 aufgeheizt.

Um die Reinigungswirkung während des Programmschritts Reinigen R zu erhöhen, ist vorgesehen, durch Erhöhung der Drehzahl der Umwälzpumpe UP den Sprühdruck der aus dem Sprüharm SA austretenden Wasserstrahlen zu steigern. Hierzu wird während des Programmschritts Reinigen R während der Nachwaschphase NA die mittels der Umwälzpumpe UP umgewälzte Flüssigkeitsmenge durch einen Nachfüllschritt erhöht, bspw. zum Zeitpunkt t1 (vgl. Figur 2), und anschließend die Drehzahl der Umwälzpumpe UP erhöht, z.B. kontinuierlich, bis die Umwälzpumpe wieder unter Rundlaufbedingung läuft, d.h. während des Betriebs keine Luftblasen ansaugt, was die Förderleistung der Umwälzpumpe UP reduziert und zu einer unerwünschten Geräuschentwicklung führt. Hierdurch wird es möglich, die während des Desorbierens freigesetzte Flüssigkeitsmenge, die im Trocknungsmaterial ZEO gespeichert war, bei der Bemessung der nachzufüllenden Flüssigkeitsmenge zu berücksichtigen und somit den Gesamtwasserbedarf bei verbesserter Reinigungsleistung zu reduzieren.

Zwischen dem Programmschritt Klarspülen K und dem Programmschritt Trocknen T ist eine Abtropfphase AB vorgesehen (vgl. Figur 2), während der am gereinigten Spülgut anhaftende Flüssigkeit, d.h. mit Klarspüler versetztes Wasser, schwerkraftbedingt von dem Spülgut ablaufen kann und sich in den Pumpensumpf PS des Innenraums IR der Geschirrspülmaschine GS sammeln kann. Hierdurch wird die von dem Sorptionstrocknungssystem aufzunehmende Flüssigkeitsmenge reduziert und damit die Dauer des Programmschritt Trocknen T.

Vor dieser Abtropfphase AB, d.h. am Ende des Programmschritts Klarspülen K, erfolgt ein Abpumpvorgang, bei dem die mit Klarspüler versetzte Flüssigkeit mittels der Laugenpumpe LP durch die Entleerungsleitung EL in ein hausseitiges Abwasserentsorgungssystem gefördert wird. Es folgt die Abtropfphase AB, während der weder die Umwälzpumpe UP noch die Laugenpumpe LP sowie auch nicht der Lüfter LT oder eine der genannten Heizungen HZ, WZ in Betrieb sind. Nach Ablauf dieser Abtropfphase AB beginnt der Programmschritt Trocknen T durch Inbetriebnahme des Lüfters LT, so dass eine durch den Innenraum IR der Geschirrspülmaschine und dem Sorptionsbehälter SB zirkulierende Luftströmung erzeugt wird, um das gereinigte Spülgut in den Geschirrkörben GK zu trocknen. Am Ende des Programmschritts Trocknen T erfolgt ein weiterer Abpumpvorgang mittels der Laugenpumpe LP, mittels dem eine verbleibende Flüssigkeitsmenge aus der Geschirrspülmaschine GS durch die Entleerungsleitung EL in ein hausseitiges Abwasserentsorgungssystem gefördert wird. Alternativ hierzu kann auch vorgesehen sein, einen weiteren Abpumpvorgang zusätzlich oder alternativ zu Beginn des Programmschritts Trocknen T durchzuführen.

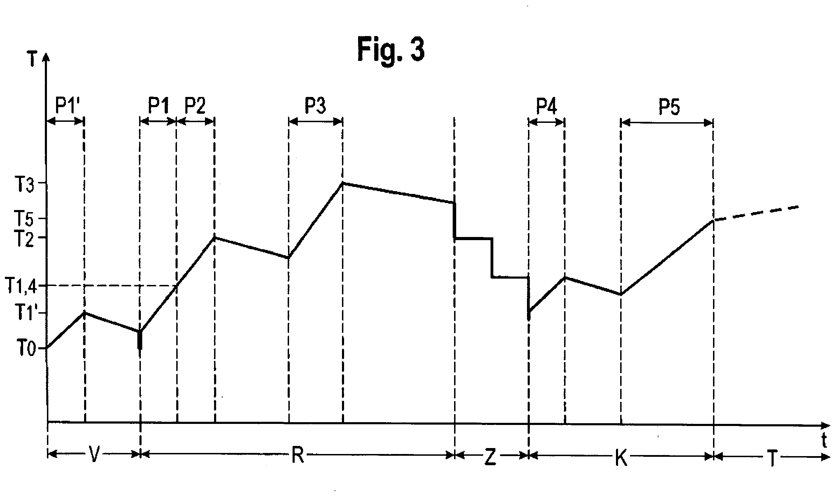

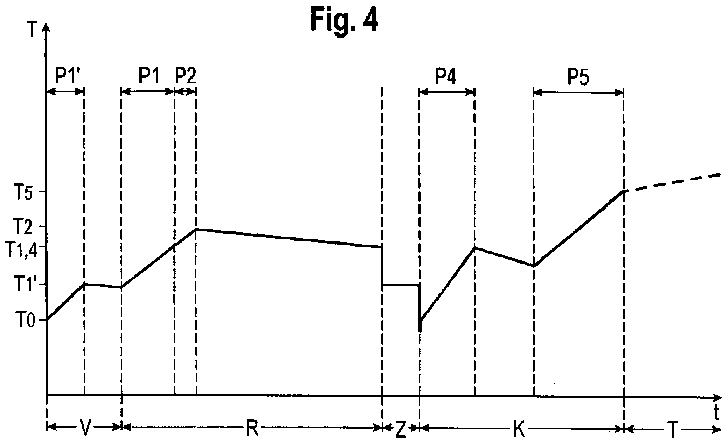

Bei dem Spülprogramm gemäß Figur 3 und 4 erfolgt eine Erwärmung von Flüssigkeit im ersten der Programmschritte, dem Programmschritt Vorspülen V. Hierzu wird mittels der Luftheizung HZ Flüssigkeit ausgehend von einer Starttemperatur T0 während einer Phase P1' auf eine Temperatur T1' erwärmt, in dem wie oben beschrieben mittels des Lüfters LT eine durch den Innenraum IR der Geschirrspülmaschine GS und dem Sorptionsbehälter SB zirkulierende Luftströmung erzeugt wird. Nach Erreichen der Temperatur T1' wird die Luftheizung HZ deaktiviert. Zu diesem Zeitpunkt ist das Trocknungsmaterial ZEO noch nicht vollständig desorbiert, d.h. in dem Trocknungsmaterial ZEO ist eine Restwassermenge gespeichert. Um diese Restwassermenge aus dem Trocknungsmaterial ZEO auszutreiben und somit ein wieder voll wasseraufnahmefähiges Trocknungsmaterial ZEO zu Beginn des Programmschritts Trocknen T zur Verfügung zu haben, wird im nachfolgenden Programmschritt Reinigen R zuerst die Flüssigkeit mittels der Luftheizung HZ auf eine Temperatur T1 aufgeheizt und anschließend durch Betrieb der Wasserheizung auf die Temperatur T2 aufgeheizt. Das heißt, die Desorptionsphase des Trocknungsmittels ZEO im Sorptionsbehälter SB ist in diesem Ausführungsbeispiel zweigeteilt und verteilt sich auf zwei Programmschritte, nämlich den Programmschritt Vorspülen V und den Programmschritt Reinigen R.

Um die Reinigungswirkung durch eine weitere Erhöhung der Temperatur zu steigern, kann eine weitere Phase P3 (vgl. Figur 3) vorgesehen sein, während der mit der Wasserheizung WZ eine weitere Erwärmung der Flüssigkeit auf eine Temperatur T3 erfolgt.

Um das Trocknungsergebnis am Ende des Programmschritts Trocknen T zu verbessern, ist bei den Ausführungsbeispielen gemäß den Figuren 3 und 4 vorgesehen, dass während des Klarspülschritts K eine Erwärmung der Flüssigkeit erfolgt. Hierzu wird während einer Phase P4 mittels der Wasserheizung WZ Flüssigkeit, bei der es sich um Wasser oder um mit Klarspüler versetztes Wasser handelt, auf eine Temperatur T4 aufgeheizt. Alternativ kann hierzu anstelle der Wasserheizung auch die Luftheizung HZ verwendet werden, um z.B. eine bisher im Programmverlauf nicht vollständig erfolgte Desorption zu vollenden. Zusätzlich kann während einer weiteren Phase P5 eine weitere Erwärmung der Flüssigkeit auf eine Temperatur T5 erfolgen, um die Trocknung mit der Sorptionstrocknungssystem zu verbessern.

### Bezugszeichenliste

- AB: Abtropfphase
- AU: Ausblasöffnung
- BO: Bodenbaugruppe
- EI: Einlass

- EL: Entsorgungsleitung
- GK: Geschirrkorb

- GS: Geschirrspülmaschine
- HZ: Luftheizung
- IR: Innenraum

- LK: Luftkanal
- LP: Laugenpumpe
- LT: Lüfter

- NA: Nachwaschphase
- PT: Phase T

- P1: Phase 1
- P2: Phase 2
- P3: Phase 3
- P4: Phase 4
- P5: Phase 5
- PS: Pumpensumpf
- SA: Sprüharm
- SB: Sorptionsbehälter
- t1: Nachfüllzeitpunkt
- TO: Starttemperatur
- TT: Temperatur
- T1: Temperatur
- T2: Temperatur
- T3: Temperatur
- T4: Temperatur
- T5: Temperatur
- UP: Umwälzpumpe
- WZ: Wasserheizung
- ZEO: T rocknungsmaterial
- ZL: Zuführleitung

## Patentansprüche

1. Verfahren zum Betreiben einer Geschirrspülmaschine (GS), insbesondere einer Haushalts-Geschirrspülmaschine, bei dem wenigstens zeitweise Spülgut während wenigstens zwei einer Mehrzahl von Programmschritten (V, R, Z, K, T) mit erwärmter Flüssigkeit beaufschlagt wird, wobei diese wenigstens zwei Programmschritte einen Programmschritt Vorspülen (V) und einen Programmschritt Reinigen (R) umfassen, und bei dem wenigstens teilweise ein Desorptionsvorgang eines reversibel dehydrierbaren Trockenmaterials (ZEO), insbesondere Zeolith, eines Sorptionstrocknungssystems in einem Sorptionsbehälter (SB) bewirkt wird, wobei der Desorptionsvorgang zweigeteilt und auf die Programmschritte Vorspülen (V) und Reinigen (R) verteilt wird, wobei die Flüssigkeit während des Programmschritts Vorspülen (V) mit Hilfe einer Luftheizung (HZ) des Sorptionstrocknungssystems ausgehend von einer Starttemperatur T0 während einer Phase P1' auf eine Temperatur T1' erwärmt wird, indem mittels eines Lüfters (LT) eine durch den Innenraum (IR) der Geschirrspülmaschine (GS) und den Sorptionsbehälter (SB) zirkulierende Luftströmung erzeugt wird, wobei die Luftheizung (HZ) nach Erreichen der Temperatur T1' während der restlichen Vorspülphase (V) deaktiviert wird, wobei zu dem Zeitpunkt der Deaktivierung der Luftheizung das Trocknungsmaterial (ZEO) noch nicht vollständig desorbiert ist, und wobei die Flüssigkeit im nachfolgenden Programmschritt Reinigen (R) mittels der Luftheizung (HZ) auf eine Temperatur T1 und anschließend durch Betrieb einer Wasserheizung (WZ) auf die Temperatur T2 aufgeheizt wird, und dass während eines weiteren Programmschritts Klarspülen (K) eine Erwärmung der Flüssigkeit erfolgt.

2. Verfahren nach Anspruch 1, **dadurch gekennzeichnet, dass** der Programmschritt Reinigen (R) mit Reinigerzugabe und Reinigungswirkung durchgeführt wird.

3. Verfahren nach Anspruch 1 oder 2, **dadurch gekennzeichnet, dass** der Programmschritt Vorspülen (V) mit Reinigungswirkung ohne Reinigerzugabe durchgeführt wird.

4. Verfahren nach mindestens einem der Ansprüche 1 bis 3, **dadurch gekennzeichnet, dass** in einem in wärmeleitenden Kontakt mit der Umgebung der Geschirrspülmaschine (GS) stehenden Wassertank eine Flüssigkeitsmenge, insbesondere einer Frischwassermenge aus einem hausseitigen Wasserversorgungssystem, zwischengespeichert wird.

5. Geschirrspülmaschine (GS), insbesondere Haushalts-Geschirrspülmaschine, ausgebildet zur wenigstens zeitweise Beaufschlagung von Spülgut mit erwärmter Flüssigkeit während wenigstens zwei einer Mehrzahl von Programmschritten (V, R, Z, K, T) und mit einem Sorptionstrocknungssystem, das ausgebildet ist, wenigstens teilweise einen Desorptionsvorgang eines reversibel dehydrierbaren Trockenmaterials (ZEO), insbesondere Zeolith, in einem Sorptionsbehälter (SB) zu bewirken, **dadurch gekennzeichnet, dass** die Geschirrspülmaschine (GS) ausgebildet ist, das Verfahren gemäß einem der vorherigen Ansprüche durchzuführen.

6. Geschirrspülmaschine (GS) nach Anspruch 5, **dadurch gekennzeichnet, dass** der Programmschritt Reinigen (R) mit Reinigerzugabe und Reinigungswirkung durchführbar ist.

7. Geschirrspülmaschine (GS) nach Anspruch 5 oder 6, **dadurch gekennzeichnet, dass** der Programmschritt Vorspülen (V) mit Reinigungswirkung ohne Reinigerzugabe durchführbar ist.

8. Geschirrspülmaschine (GS) nach mindestens einem der Ansprüche 5 bis 7, **gekennzeichnet durch** einen in wärmeleitenden Kontakt mit der Umgebung der Geschirrspülmaschine stehenden Wassertank zur Zwischenspeicherung einer Flüssigkeitsmenge, insbesondere einer Frischwassermenge aus einem hausseitigen Wasserversorgungssystem.

## Claims

1. Method for operating a dishwasher (GS), in particular a household dishwasher, wherein a heated liquid is applied to the wash items, at least at times, during at least two of a multiplicity of program steps (V, R, Z, K, T), wherein said at least two program steps comprise a pre-rinse (V) program step and a cleaning (R) program step, and in which a desorption process for the desorption of a reversibly dehydratable drying material (ZEO), in particular zeolite, of a sorption drying system is generated in a sorption container (SB) at least at times, wherein the desorption process is divided in two and is distributed over the pre-wash (V) and cleaning (R) program steps, wherein during the pre-rinse (V) program step the liquid is heated with the aid of an air heating system (HZ) of the sorption drying system, starting from an initial temperature (T0) to a temperature T1' during a phase P1', by an air flow being generated by means of a fan (LT), which circulates through the interior space (IR) of the dishwasher (GS) and the sorption container (SB), wherein the air heating system (HZ) is deactivated during the rest of the pre-rinse phase (V) after the temperature T1' has been reached, wherein at the time of the deactivation of the air heating system, the drying material (ZEO) has not yet been completely desorbed, and wherein the liquid is heated to a temperature T1 in the following cleaning (R) program step by means of the air heating system (HZ) and is subsequently heated to the temperature T2 by operating a water heating system (WZ), and that during a further rinsing (K) program step a heating of the liquid takes place.

2. Method according to claim 1, **characterised in that** the cleaning (R) program step is carried out with the addition of cleaning agent and with cleaning action.

3. Method according to claim 1 or 2, **characterised in that** the pre-rinse (V) program step is carried out with cleaning action and without the addition of cleaning agent.

4. Method according to at least one of claims 1 to 3, **characterised in that** a quantity of liquid, in particular a quantity of fresh water from a domestic water supply system, is temporarily stored in a water tank that is in heat-conducting contact with the surroundings of the dishwasher (GS) .

5. Dishwasher (GS), in particular a household dishwasher, designed for applying heated liquid to wash items, at least at times, during at least two of a multiplicity of program steps (V, R, Z, K, T), and a sorption drying system which is designed to generate a desorption process for the desorption of a reversibly dehydratable drying material (ZFO), in particular zeolite, at least at times, **characterised in that** the dishwasher (GS) is embodied to carry out the method according to one of the preceding claims.

6. Dishwasher (GS) according to claim 5, **characterised in that** the cleaning (R) program step can be carried out with the addition of cleaning agent and with cleaning action.

7. Dishwasher (GS) according to claim 5 or 6, **characterised in that** the pre-rinse (V) program step can be carried out with cleaning action and without the addition of cleaning agent.

8. Dishwasher (GS) according to at least one of claims 5 to 7, **characterised by** a water tank that is in heat-conducting contact with the surroundings of the dishwasher (GS) for temporarily storing a quantity of liquid, in particular a quantity of fresh water from a domestic water supply system.

## Revendications

1. Procédé de fonctionnement d'un lave-vaisselle (GS), notamment d'un lave-vaisselle à usage domestique, dans lequel des produits à laver sont alimentés en liquide échauffé au moins temporairement pendant au moins deux d'une pluralité d'étapes de programme (V, R, Z, K, T), ces au moins deux étapes de programme comprenant une étape de programme prélavage (V) et une étape de programme nettoyage (R), et dans lequel une opération de désorption d'une matière sèche (ZEO) réversiblement déshydrogénable, notamment de la zéolithe, d'un système de séchage par sorption est effectuée au moins en partie dans un réservoir de sorption (SB), l'opération de désorption étant divisée en deux parties et répartie sur les étapes de programme prélavage (V) et nettoyage (R), le liquide étant échauffé à une température T1' pendant une phase P1' en partant d'une température de départ T0 pendant l'étape de programme prélavage (V) à l'aide d'un chauffage à air (HZ) du système de séchage par sorption, du fait qu'un courant d'air circulant à travers l'espace intérieur (IR) du lave-vaisselle (GS) et à travers le réservoir de sorption (SB) est généré au moyen d'un ventilateur (LT), le chauffage à air (HZ), après l'obtention de la température T1', étant désactivé pendant la phase restante du prélavage (V), la matière de séchage (ZEO), au moment de la désactivation du chauffage à air, n'étant pas encore complètement désorbée, et le liquide, pendant l'étape de programme suivante nettoyage (R), étant échauffé à une température T1 au moyen du chauffage à air (HZ) et ensuite à une température T2 en raison du fonctionnement d'un chauffage à eau (WZ), et un échauffement du liquide ayant lieu pendant une étape de programme supplémentaire rinçage (K).

2. Procédé selon la revendication 1, **caractérisé en ce que** l'étape de programme nettoyage (R) est réalisée avec adjonction de produit nettoyant et action nettoyante.

3. Procédé selon la revendication 1 ou 2, **caractérisé en ce que** l'étape de programme prélavage (V) est réalisée avec action nettoyante sans adjonction de produit nettoyant.

4. Procédé selon au moins l'une quelconque des revendications 1 à 3, **caractérisé en ce qu'**une quantité de liquide, notamment une quantité d'eau fraîche provenant d'un système d'alimentation en eau côté domestique, est provisoirement stockée dans un réservoir d'eau en contact conducteur de chaleur avec les environs du lave-vaisselle (GS).

5. Lave-vaisselle (GS), notamment lave-vaisselle à usage domestique, réalisé pour l'alimentation au moins temporaire de produits à laver en liquide échauffé pendant au moins deux d'une pluralité d'étapes de programme (V, R, Z, K, T), et comprenant un système de séchage par sorption qui est réalisé pour provoquer au moins en partie une opération de désorption d'une matière sèche (ZEO) réversiblement déshydrogénable, notamment de la zéolithe, dans un réservoir de sorption (SB), **caractérisé en ce que** le lave-vaisselle (GS) est réalisé pour effectuer le procédé selon l'une quelconque des revendications précédentes.

6. Lave-vaisselle (GS) selon la revendication 5, **caractérisé en ce que** l'étape de programme nettoyage (R) est réalisable avec adjonction de produit nettoyant et action nettoyante.

7. Lave-vaisselle (GS) selon la revendication 5 ou 6, **caractérisé en ce que** l'étape de programme prélavage (V) est réalisable avec action nettoyante sans adjonction de produit nettoyant.

8. Lave-vaisselle (GS) selon au moins l'une quelconque des revendications 5 à 7, **caractérisé par** un réservoir d'eau en contact conducteur de chaleur avec les environs du lave-vaisselle pour le stockage intermédiaire d'une quantité de liquide, notamment d'une quantité d'eau fraîche provenant d'un système d'alimentation en eau côté domestique.
